# FASCICULE DE BREVET EUROPEEN

(11) **EP 0 825 822 B1**
(45) Date de publication et mention de la délivrance du brevet: **14.11.2001**
(21) Numéro de dépôt: 96915031.7
(22) Date de dépôt: 07.05.1996
(51) Int. Cl.: A23L 3/54

(54) **PROCEDE ET DISPOSITIF DE DESHYDRATATION**
VERFAHREN UND VORRICHTUNG ZUM ENTWÄSSERN
DEHYDRATION METHOD AND DEVICE

(30) Priorité: 09.05.1995 BE 9500420
(43) Date de publication de la demande: 04.03.1998
(73) Titulaire: CONSEJO SUPERIOR DE INVESTIGACIONES CIENTIFICAS, 28006 Madrid (ES)
(72) Inventeur: GALLEGO JUAREZ, Juan, A., E-28043 Madrid (ES); YANG, Tom, Wayland, MA 01778 (US); VAZQUEZ MARTINEZ, Fernando, E-28002 Madrid (ES); GALVEZ MORALEDA, Juan, Carlos, E-28030 Madrid (ES); RODRIQUEZ CORRAL, Gérman, E-28006 Madrid (ES)
(74) Mandataire: Donné, Eddy
(86) Numéro de dépôt international: EP9601935
(87) Numéro de publication internationale: WO9635340

(56) Documents cités:
- EP-A- 0 130 342
- EP-A- 0 450 030
- CH-A- 676 879
- DE-A- 2 950 384
- DE-A- 3 934 500
- FOOD TECHNOLOGY, vol. 23, no. 321, Mars 1969, pages 47-50, XP002007138 L. G. BARTOLOME ET AL.: "effect of resonant acoustic vibrations on drying rates of potato cylinders"
- PATENT ABSTRACTS OF JAPAN vol. 16, no. 446 (M-1311), 17 Septembre 1992 & JP,A,04 155177 (KOJIKA TOSHIO ET AL.), 28 Mai 1992,
- PATENT ABSTRACTS OF JAPAN vol. 15, no. 193 (C-0832), 17 Mai 1991 & JP,A,30 051085 (NIPPON COMPUTER S C I), 5 Mars 1991,
- DATABASE WPI Week 8545 Derwent Publications Ltd., London, GB; AN 85-279131 XP002007139 & JP,A,60 188 046 (BIBUN) , 25 Septembre 1985

## Description

L'invention concerne un procédé de déshydratation de produits solides contenant de l'humidité, en particulier d'aliments, selon lequel un courant de gaz chaud est conduit sur les produits pendant qu'ils sont soumis à des ondes ultrasonores.

Des procédés classiques pour dessécher ou déshydrater des aliments par un courant forcé d'air chaud sont relativement économiques mais l'élimination de l'humidité intérieure demande assez de temps. En plus, des températures élevées peuvent endommager les aliments, ce qui peut dans certains cas déteriorer la couleur, le goût, la possibilité de réhydrater et la valeur nutritive.

D'autres procédés peuvent éviter ces inconvénients, mais certains comme la lyophilisation sont chers, ou d'autres comme le séchage par pulvérisation ne sont applicables qu'à des liquides ou des pâtes.

Il est connu qu'un apport d'énergie vibratoire peut favoriser la déshydratation.

Ainsi, US-A-2.297.726 décrit un procédé selon lequel des produits atomisés sont soumis à des ondes sonores et ensuite à une évaporation.

US-A-2.344,754 décrit la déshydratation à l'aide d'une vibration sonore ou ultrasonore en combinaison avec des courants électriques à haute fréquence.

US-A-3.175.299 concerne le desséchage de cristaux de sucre par des ondes accoustiques.

Selon US-A-3.592.395, des boues ou poudres fines sont desséchées dans un lit fluidisé agité. L'agitation tend à diminuer la grandeur des particules du produit ce qui en diminue la valeur commerciale. Cette agitation peut en plus endommager des produits délicats.

Une autre application de vibration sonore pour déshydrater est décrite dans US-A-3.641.680. L'enlèvement électrostatique de l'humidité d'une lessive humide ou de boues est assisté par vibration.

La combinaison d'air chaud et d'ondes sonores pour déshydrater des produits alimentaires est déjà connue de US-A-4.334.366. Les produits alimentaires sont introduits dans un tambour rotatif perforé et chauffés par un brûleur à pulsations fournissant des vibrations sonores. L'énergie sonore, ou plus particulièrement la succession de cycles de compression-expansion qu'elle occassionne, enlève l'humidité à la surface des particules. L'air chaud est nécessaire pour enlever par convection l'humidité de l'intérieur des particules. L'efficacité de la déshydratation augmente avec la température et la plupart de ces dispositifs avec un brûleur à pulsations occassionnent une température élévée, par exemple de plus de 1000°C.

A cette haute température, le temps de séchage est de quelques fractions de seconde, ce qui rend tout contrôle des conditions de travail difficile et rend le procéde inapte pour déshydrater des aliments sensibles à la chaleur. L'utilisation de températures moins élevées diminue fortement l'efficacité du procédé.

Le procédé susdit cause des fuites de son vers l'environnement au-dessus de 140 dB, ce qui requiert une atténuation importante du son. En plus, la consistence des aliments est difficile à maintenir.

Ce procédé à été perfectionné selon US-A-4.708.159, mais son application a été limitée alors à des solutions ou boues.

Il est donc connu que la vibration accoustique améliore l'efficacité de la déshydratation, mais dans la plupart des cas, et en particulier pour dessécher des aliments, l'amélioration s'est revelée insuffisante pour justifier la commercialisation.

Le but de la présente invention est de pallier ces désavantages et de fournir un procédé de déshydratation simple et efficace, et donc rapide et par conséquent économiquement faisable, et qui en particulier permet de dessécher des aliments sans les déteriorer.

Ce but est atteint par le fait que les ondes ultrasonores sont diffusées dans le produit par l'intermédiaire de plaques vibrantes qui sont mises en contact direct avec les produits.

De préférence, une pression statique est exercée par ces plaques sur les produits.

La température du gaz chaud peut être inférieure à 60°C et est par exemple d'environ 25°C.

L'invention concerne également un dispositif qui est particulièrement apte à réaliser le procédé selon l'invention décrit ci-devant.

La présente invention concerne ainsi un dispositif pour la déshydratation de produits solides contenant de l'humidité, en particulier d'aliments, comprenant des moyens pour créer un courant de gaz chaud le long des produits à dessécher et des moyens pour diriger des ondes ultrasonores sur ces produits, caractérisé en ce que ce dispositif comprend une enceinte fermée, au moins un transporteur monté dans cette enceinte pour transporter les produits à dessécher, les moyens pour diriger des ondes ultrasonores sur ces produits comprenant plusieurs diffuseurs d'ultrasons sous forme de plaques connectées à des générateurs d'ondes sonores et en contact direct avec les produits.

De préférence, ces plaques diffusantes sont montées de manière à exercer une pression statique sur les produits.

Les plaques diffusantes peuvent être stationnaires dans le sens de transport par le transporteur, la distance entre le transporteur et les plaques étant alors réglables. Elles peuvent être mobiles dans le sens de transport, des moyens étant prévus pour déplacer les plaques à la même vitesse que les produits sur le transporteur.

Pour plus de clarté, deux exemples de réalisation d'un procedé et d'un dispositif de déshydratation selon l'invention sont décrits ci-après à titre illustratif et non restrictif, référence étant faite aux dessins annexés dans lesquels :
la figure 1 est une coupe longitudinale schématique d'un dispositif de déshydratation d'aliments selon l'invention;
la figure 2 représente une coupe selon la ligne II-II de la figure 1, à échelle plus grande;
la figure 3 représente une coupe selon la ligne III-III de la figure 2;
la figure 4 est une coupe selon la ligne IV-IV de la figure 1;
la figure 5 est une coupe selon la ligne V-V de la figure 1;
la figure 6 est une coupe longitudinale semblable à celle de la figure 1, mais concernant une autre forme de réalisation du dispositif selon l'invention;
les figures 7 et 8 sont des coupes selon les lignes VII-VII et VIII-VIII de la figure 6.

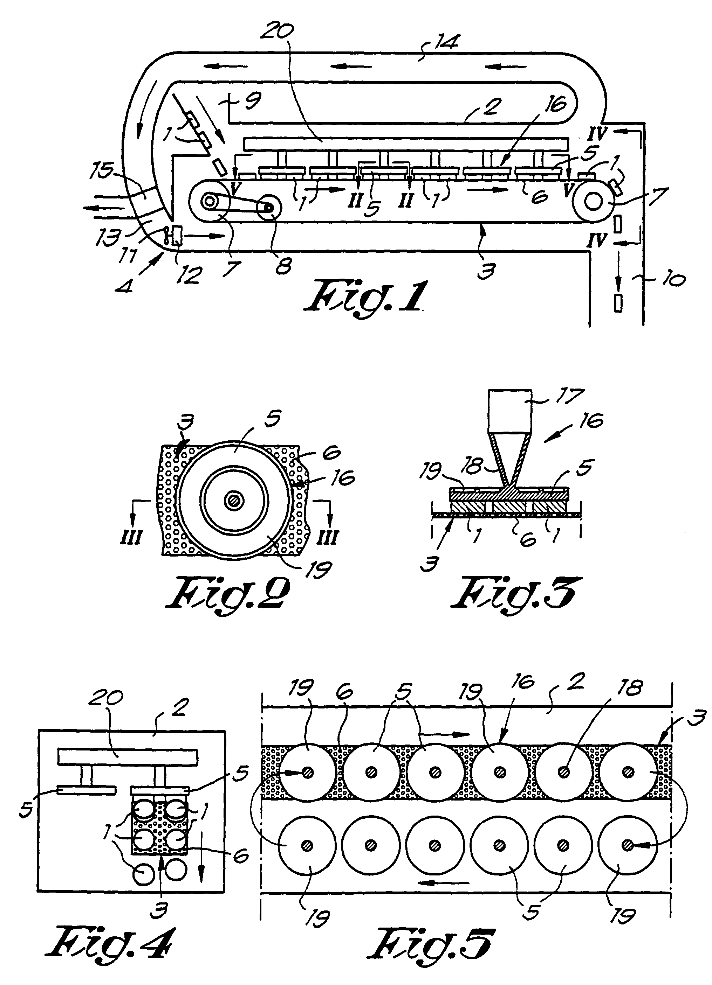

Les figures 1 à 5 représentent un dispositif de déshydratation de produits alimentaires sous forme de petites pièces solides 1 d'épaisseur à peu près égale, ce dispositif comprenant une enceinte fermée 2 dans laquelle est disposé un transporteur 3 pour le transport des pièces 1, des moyens 4 étant prévus pour créer un courant d'air chaud dans cette enceinte, le long de ce transporteur 3 tandis que des diffuseurs d'ultrasons sous forme de plaques 5, sont montés au-dessus du transporteur 3.

Ce transporteur 3 comprend une bande sans fin perforée 6 horizontale entourant des rouleaux 7, dont l'un au moins est entraîné par un moteur 8.

L'enceinte 2 forme un tunnel horizontal et est pourvue d'une entrée 9 pour les pièces 1, débouchant au-dessus d'une extrémité de la bande sans fin 6, et d'une sortie 10 pour les pièces déshydratées au-dessous de l'autre extrémité de la bande sans fin 6.

Les moyens 4 pour créer un courant d'air chaud dans l'enceinte comprennent un ventilateur 11 et un élément chauffant 12 dans une entrée d'air 13 débouchant dans la partie inférieure de l'enceinte 2, du côté de l'entrée 9 susdite, et une conduite d'évacuation 14 d'air chargé d'humidité et connectée à la partie supérieure de l'enceinte 2. Cette conduite 14 passe par un séparateur d'humidité 15 et rejoint l'entrée d'air 13.

Chaque plaque diffusante 5 fait partie d'un système émetteur d'ultrasons 16 comprenant outre la plaque 5, un générateur d'ultrasons 17 formé par exemple par un élément piézo-électrique ou magnétorestrictif, et un amplificateur mécanique 18 formé par exemple par une corne entre cet élément 17 et la plaque 5.

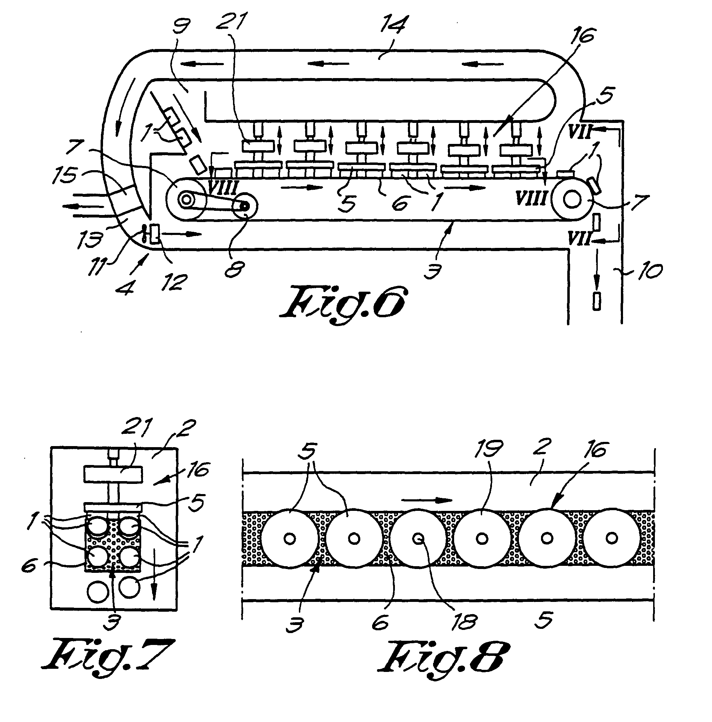

Comme montré en détail aux figures 2 et 3, la plaque diffusante 5, qui est par exemple ronde, présente un profil discontinu, notamment des rainures 19 sur sa face supérieure, sa face inférieure étant lisse. L'enlèvement de matière des zones internodales, c'est-à-dire des rainures dans la face supérieure, permettent de modifier la distribution de l'amplitude des vibrations de manière que la surface plane inférieure de la plaque 5 vibre avec un niveau uniforme d'amplitude, ce qui résulte dans un effet uniforme sur les pièces 1.

En fait, ces systèmes émetteurs d'ultrasons 16 sont une variante des systèmes décrits dans EP-A-450.030, le relief des plaques 5 étant situé uniquement du côté supérieur de celles-ci.

Les systèmes 16 sont mobiles, de manière à pouvoir se déplacer avec le brin supérieur de la bande sans fin 6. A cette fin, ces générateurs sont suspendus dans des chariots guidés dans une structure de support 20 montée au-dessus du transporteur 3 dans l'enceinte 2, et entraînés par des moyens non représentés aux figures, selon un chemin fermé dont une partie est parallèle au brin supérieur de la bande sans fin 6, tel que représenté par des flèches à la figure 5.

Chaque système émetteur d'ondes ultrasonores 16 est monté sur son chariot d'une manière à exercer une légère pression statique sur les pièces solides sur le transporteur 3, soit par son propre poids, soit sous l'influence de moyens tel qu'un ressort, poussant les systèmes individuellement ou en groupe vers le bas.

Les systèmes 16 sont alimentés en énergie électrique par l'intermédiaire d'un système de contrôle électronique de manière à assurer une fréquence adéquate des plaques 5, cette fréquence étant influencée par le contact direct des plaques 5 avec les pièces 1 à déshydrater.

La déshydratation des pièces solides 1 d'aliments a lieu comme suit:

Les pièces 1 à déshydrater sont introduites par l'entrée 9 et étendues en rangées sur une seule couche sur le brin supérieur du transporteur 3.

Ces pièces sont prises entre ce brin et les plaques 5 diffusant les ondes ultrasonores.

Ces ondes causent des contractions et expansions successives rapides du matériau des pièces 1. A chaque contraction, une quantité minuscule d'eau est expulsée vers la surface des pièces, où cette eau est évaporée par le courant d'air chauffé à moins de 60°C, par exemple à environ 25°C. La température de l'air et son débit sont ajustées par l'élément chauffant 12 et le ventilateur 11. Cet air traverse les ouvertures dans la bande sans fin 6.

Au fur et à mesure que les pièces sont déshydratées, leur épaisseur diminue, mais le contact d'une plaque 5 avec ces pièces demeure assuré, vu le montage du système 16 correspondant qui continue d'excercer une pression sur les pièces.

Une fois arrivées à l'autre extrémité du transporteur 3, les pièces 1 déshydratées tombent dans la sortie 10 et sont évacuées.

L'air chargé d'humidité est évacué par la conduite d'évacuation 14 et recyclé dans l'enceinte 2 après assèchement dans le séparateur d'humidité 15 et réchauffement par l'élément chauffant 12.

En raison de la pression statique continue ou même augmentante au fur et à mesure de la déshydratation, le contact des plaques 5 avec les pièces demeure assuré et les pièces sont gentiment comprimées en une forme de disque plat. Le temps de séjour des pièces 1 dans l'enceinte peut être extrêmement court.

La nature visco-élastique des aliments et la pression hydrodynamique de l'humidité résiduaire dans les pièces soutienent les tissus délicats des aliments et préviennent des transformations irréversibles. Plus ces tissus sont comprimés, plus ils forment un médium idéal pour un traitement par diffusion d'ondes ultrasonores.

Les pièces déshydratées sont parfaitement lisses et plates. En raison des températures assez basses lors de la déshydratation et le temps assez court du traitement, les qualités comme la couleur, le goût, la capacité de réhydratation et la valeur nutritive des aliments déshydratés demeurent inchangées.

L'énergie nécessaire au traitement est minimale.

Il est évident qu'au lieu d'être continu, le mouvement des pièces durant la déshydratation peut être discontinu.

Dans ce dernier cas, les systèmes 16 peuvent être stationnaires dans le sens de mouvement du transporteur 3.

Les figures 6 à 8 concernent un tel dispositif qui diffère du dispositif selon les figures 1 à 5 par le fait que les générateurs ne sont pas mobiles et portés par une structure de support unique 20 mais supportés individuellement ou en groupe par des structures de support 21 qui sont stationnaires dans le sens de mouvement du transporteur 3 mais déplaçables en hauteur par rapport à ce transporteur 3, par exemple à l'aide de dispositifs hydrauliques ou pneumatiques.

En fait, la distance entre les plaques 5 et le transporteur 3 diminue au fur et à mesure que ces plaques sont plus proches de la sortie 10.

Ainsi les plaques 5 sont maintenues en contact avec les pièses 1 et une pression est maintenue sur les pièces 1 pendant leur déshydratation.

Le transporteur 3 est entraîné par intermittence. Pendant chaque mouvement de ce transporteur 3, les générateurs sont mis dans leur position supérieure, après quoi ils sont descendus sur les pièces 1 qui ont été déplaçées d'un système 16 ou groupes de systèmes 16 à l'autre.

Des parties d'aliment ne peuvent s'incruster dans des rainures ou cavités dans la plaque puisque la face inférieure de celle-ci est plane et lisse.

La pression exercée par les plaques est limitée de manière à ce que les pièces ne collent pas à ces plaques.

Lorsqu'un autre aliment est traité dans le dispositif, les plaques peuvent être nettoyées.

Il est évident que les plaques 5 diffusant les ondes ultrasonores ne doivent pas nécessairement être rondes. Elles peuvent avoir une autre forme appropriée telle que par exemple la forme d'un rectangle ou un carré.

## Revendications

1. Procédé de déshydratation de produits solides contenant de l'humidité, en particulier d'aliments, selon lequel un courant de gaz chaud est conduit sur les produits tandis qu'ils sont soumis à des ondes ultrasonores, **caractérisé en ce que** les ondes ultrasonores sont diffusées dans le produit par l'intermédiaire de plaques (5) vibrantes qui sont mises en contact direct avec les produits.

2. Procédé selon la revendication 1, **caractérisé en ce qu'**une pression statique est exercée par ces plaques (5) sur les produits.

3. Procédé selon l'une ou l'autre des revendications précédentes, **caractérisé en ce que** la température du gaz chaud est inférieure à 60°C.

4. Dispositif pour la déshydratation de produits solides contenant de l'humidité, en particulier d'aliments, comprenant des moyens (11-12-13-14) pour créer un courant de gaz chaud le long des produits à déshydrater et des moyens (16) pour diriger des ondes ultrasonores sur ces produits, **caractérisé en ce qu'**il comprend une enceinte fermée (2), au moins un transporteur (3) monté dans cette enceinte (2) pour transporter les produits à déshydrater, les moyens (16) pour diriger des ondes ultrasonores sur ces produits comprenant plusieurs diffuseurs d'ultrasons sous forme de plaques (5) connectées à des générateurs (17) d'ondes sonores et en contact direct avec les produits.

5. Dispositif selon la revendication 4, **caractérisé en ce que** les plaques diffusantes (5) sont montées de manière à exercer une pression sur les produits.

6. Dispositif selon l'une ou l'autre des revendications 4 et 5, **caractérisé en ce que** les plaques diffusantes (5) sont stationnaires dans le sens de transport par le transporteur (3), la distance entre le transporteur et les plaques étant alors réglable.

7. Dispositif selon l'une ou l'autre des revendications 4 et 5, **caractérisé en ce que** les plaques diffusantes (5) sont mobiles dans le sens de transport, des moyens étant prévus pour déplacer les plaques à la même vitesse que les produits sur le transporteur.

8. Dispositif selon l'une ou l'autre des revendications 4 à 7, **caractérisé en ce que** le transporteur (3) comprend une bande sans fin perforée (6) et des moyens (8) pour l'entraîner.

9. Dispositif selon l'une ou l'autre des revendications 4 à 8, **caractérisé en ce que** les plaques (5) font partie de systèmes émettant des ondes ultrasonores (16) comprenant outre cette plaque (5), un générateur d'ondes ultrasonores (17) formé par un élément piézo-électrique ou magnétorestrictif et un amplificateur mécanique (18) entre ce générateur (17) et la plaque (5).

10. Dispositif selon l'une ou l'autre des revendications 4 à 9, **caractérisé en ce que** les plaques (5) ont un profil discontinu avec un relief sur au moins une surface.

11. Dispositif selon la revendication 10, **caractérisé en ce que** la surface des plaques (5) qui est en contact avec les pièces (1) est lisse, la surface opposée étant pourvue d'un relief obtenu en enlevant du matériau dans des zones internodales.

## Patentansprüche

1. Verfahren zum Dehydratisieren von Feuchtigkeit enthaltenden Feststoffen, insbesondere Lebensmitteln, gemäß welchen Verfahrens ein heißer Gasstrom über die Produkte geleitet wird, während sie einer Behandlung durch Ultraschallwellen unterzogen werden, **dadurch gekennzeichnet, dass** die Ultraschallwellen mittels vibrierender Platten (5), die in direkten Kontakt mit den Produkten gebracht werden, im Produkt verteilt werden.

2. Verfahren gemäß Anspruch 1, **dadurch gekennzeichnet, dass** mittels dieser Platten (5) ein statischer Druck auf die Produkte ausgeübt wird.

3. Verfahren gemäß einem der vorgenannten Ansprüche, **dadurch gekennzeichnet, dass** die Temperatur des heißen Gases niedriger ist als 60°C.

4. Vorrichtung zum Dehydratisieren von Feuchtigkeit enthaltenden Feststoffen, insbesondere Lebensmitteln, die Mittel (11-12-13-14) umfasst, um einen heißen Gasstrom über den zu dehydratisierenden Produkten zu erzeugen und Mittel (16), um Ultraschallwellen über diese Produkte zu leiten, **dadurch gekennzeichnet, dass** sie ein geschlossenes Gehäuse (2) umfasst, zumindest ein in diesem Gehäuse (2) montiertes Fördermittel (3) zum Transportieren der zu dehydratisierenden Produkte, wobei die Mittel (16), um Ultraschallwellen über diese Produkte zu leiten, mehrere Ultraschallverteiler in Form von Platten (5), die an Schallwellengeneratoren (17) angeschlossen sind und sich in direktem Kontakt mit den Produkten befinden, umfassen.

5. Vorrichtung gemäß Anspruch 4, **dadurch gekennzeichnet, dass** die Verteilerplatten (5) derart montiert sind, dass sie einen Druck auf die Produkte ausüben.

6. Vorrichtung gemäß einem der Ansprüche 4 und 5, **dadurch gekennzeichnet, dass** die Verteilerplatten (5) in der Richtung des Transports durch das Fördermittel (3) stationär sind, wobei der Abstand zwischen dem Fördermittel und den Platten dann einstellbar ist.

7. Vorrichtung gemäß einem der Ansprüche 4 und 5, **dadurch gekennzeichnet, dass** die Verteilerplatten (5) in Transportrichtung mobil sind, wobei Mittel vorgesehen sind, um die Platten mit derselben Geschwindigkeit wie die Produkte auf dem Fördermittel zu bewegen.

8. Vorrichtung gemäß einem der Ansprüche 4 bis 7, **dadurch gekennzeichnet, dass** das Fördermittel (3) ein perforiertes Endlosförderband (6) und Mittel (8) zu dessen Antrieb umfasst.

9. Vorrichtung gemäß einem der Ansprüche 4 bis 8, **dadurch gekennzeichnet, dass** die Platten (5) einen Teil von Ultraschallwellen-aussendenden Systemen (16) bilden, die, außer dieser Platte (5), einen Ultraschallwellengenerator (17) umfassen, der von einem piezoelektrischen oder magnetostriktiven Element und einem mechanischen Verstärker (18) zwischen diesem Generator (17) und der Platte (5) gebildet wird.

10. Vorrichtung gemäß einem der Ansprüche 4 bis 9, **dadurch gekennzeichnet, dass** die Platten (5) ein diskontinuierliches Profil mit einem Relief an mindestens einer Oberfläche aufweisen.

11. Vorrichtung gemäß Anspruch 10, **dadurch gekennzeichnet, dass** die in Kontakt mit den Stücken (1) befindliche Oberfläche der Platten (5) glatt ist, während die gegenüberliegende Oberfläche mit einem Relief versehen ist, das durch Weglassen von Material in internodalen Bereichen erhalten wird.

## Claims

1. Method of dehydrating solid products containing moisture, particularly food products, according to which a hot gas stream is guided over the products while they are subjected to ultrasonic waves, **characterized in that** the ultrasonic waves are diffused in the product by means of vibrating plates (5) which are brought into direct contact with the products.

2. Method according to claim 1, **characterized in that** a static pressure is exerted onto the products by means of these plates (5).

3. Method according to any of the preceding claims, **characterized in that** the temperature of the hot gas is lower than 60°C.

4. Device for dehydrating solid products containing moisture, particularly food products, comprising means (11-12-13-14) to create a hot gas stream over the products to be dehydrated, and means (16) to direct ultrasonic waves over these products, **characterized in that** it comprises a closed housing (2), at least one conveyor (3) mounted in this housing (2) for transporting the products to be dehydrated, means (16) to direct ultrasonic waves over these products, comprising several ultrasonic diffusers in the shape of plates (5) connected to sound wave generators (17) and being in direct contact with the products.

5. Device according to claim 4, **characterized in that** the diffusing plates (5) are mounted in such a way as to exert a pressure onto the products.

6. Device according to any of the claims 4 and 5, **characterized in that** the diffusing plates (5) are stationary in the direction of transport by the conveyor (3), whereby the distance between the conveyor and the plates then is adjustable.

7. Device according to any of the claims 4 and 5, **characterized in that** the diffusing plates (5) are mobile in the direction of transport, whereby means are provided for moving the plates above the conveyor at the same speed as the products.

8. Device according to any of the claims 4 to 7, **characterized in that** the conveyor (3) comprises a perforated endless belt (6) and means (8) for driving it.

9. Device according to any of the claims 4 to 8, **characterized in that** the plates (5) form part of ultrasonic wave emitting systems (16) comprising, apart from this plate (5), an ultrasonic wave generator (17) formed by a piezoelectric or magnetostrictive element and a mechanic amplifier (18) between this generator (17) and the plate (5).

10. Device according to any of the claims 4 to 9, **characterized in that** the plates (5) have a discontinuous profile with a relief on at least one surface.

11. Device according to claim 10, **characterized in that** the surface of the plates (5), being in contact with the pieces (1), is smooth, whereas the opposite surface is provided with a relief obtained by removing material at internodal zones.
